# EUROPÄISCHE PATENTANMELDUNG

(11) **EP 3 915 449 A1**
(43) Veröffentlichungstag der Anmeldung: **01.12.2021**
(21) Anmeldenummer: 21176182.0
(22) Anmeldetag: 27.05.2021
(51) Int. Cl.: A47J 31/54, A47J 31/52

(54) **BRÜHGRUPPE FÜR EINE ESPRESSOMASCHINE UND ESPRESSOMASCHINE MIT EINER ENTSPRECHENDEN BRÜHGRUPPE**

(30) Priorität: 29.05.2020 DE 102020206805
(71) Anmelder: Bellezza Espressomaschinen GmbH, 69126 Heidelberg (DE)
(72) Erfinder: LÖSCH, Alexander, 68775 Ketsch (DE)
(74) Vertreter: Ullrich & Naumann PartG mbB

(57) **Zusammenfassung**

Eine Brühgruppe für eine Espressomaschine umfasst ein Gehäuse und eine unmittelbar mit dem Gehäuse verbundene und/oder zumindest teilweise in das Gehäuse integrierte Heizeinrichtung. Des Weiteren betrifft die Erfindung eine Espressomaschine mit entsprechender Brühgruppe.

## Beschreibung

Die Erfindung betrifft eine Brühgruppe für eine elektrisch arbeitende Espressomaschine, wie sie hinlänglich aus der Praxis bekannt ist. Die Brühgruppe umfasst ein Gehäuse und einen am Gehäuse funktional befestigten modellspezifischen Brühkopf, durch den heißes Wasser zirkuliert und der durch das zirkulierende Wasser beheizt wird. Die Betriebstemperatur des Brühkopfes liegt im Bereich von etwa 90° bis 95°. Des Weiteren betrifft die Erfindung eine Espressomaschine mit entsprechender Brühgruppe.

Klassische Espressomaschinen haben als Herzstück eine Brühgruppe, die es in unterschiedlichen Ausführungen gibt. Seit 1961 gibt es die Brühgruppe E61, wobei das "E" für "Eclipse" und die Zahl "61" für das Jahr 1961 steht. Es handelte sich damals um eine Modellbezeichnung für eine Espressomaschine der Firma Faema. Mittlerweile ist die Bezeichnung "E61" zum Gattungsbegriff geworden, wobei die Brühgruppe selbst eine Art Standard bei den meisten großen Herstellern von Espressomaschinen ist.

Die aus der Praxis bekannten Espressomaschinen sind in der Konstruktion aufwändig. So ist regelmäßig die das heiße Wasser bereitstellende Heizeinrichtung separat zum Brühkopf ausgebildet und entsprechend abseits vom Brühkopf angeordnet. Eine kompakte Bauweise ist dadurch nicht möglich. Außerdem bedingt die separate Anordnung der Heizeinrichtung thermisch isolierte und abgedichtete Strömungspfade, die einen weiteren konstruktiven Aufwand mit sich bringen.

Der vorliegenden Erfindung liegt daher die Aufgabe zugrunde, eine kompakte Brühgruppe anzugeben, die die im Stand der Technik auftretende Problematik eliminiert. Außerdem soll sich die Brühgruppe von wettbewerblichen Brühgruppen unterscheiden.

Voranstehende Aufgabe ist in Bezug auf die Brühgruppe durch die Merkmale des Patentanspruchs 1 gelöst. Danach ist die Heizeinrichtung unmittelbar mit dem Gehäuse der Brühgruppe verbunden und/oder zumindest teilweise in das Gehäuse integriert.

Im Betrieb kann der Wasserzulauf von der Heizeinrichtung in die Brühgruppe regulierbar sein.

Erfindungsgemäß handelt es sich bei der Brühgruppe um eine Art Hybrid, welches die klassische Brühgruppe mit der Heizeinrichtung kombiniert, nämlich durch unmittelbares Andocken und/oder teilweises Integrieren der Heizeinrichtung an/in das Gehäuse der Heizeinrichtung.

Bei der Heizeinrichtung handelt es sich im Konkreten um einen elektrischen Boiler. Die Vorkehrung alternativer elektrischer Heizeinrichtungen ist denkbar. Wesentlich ist, dass das dem Brühkopf zur Verfügung zu stellende Wasser eine Betriebstemperatur im Bereich von etwa 90°C bis 95°C erreicht.

Die Heizeinrichtung kann unmittelbar an das Gehäuse angeflanscht sein, wobei es dabei von Vorteil ist, wenn zwischen dem eigentlichen Gehäuse der Brühgruppe und der Heizeinrichtung eine temperaturbeständige Dichtung, beispielsweise in Form eines Dichtrings, vorgesehen ist. Im Falle einer solchen Anordnung lässt sich die Heizeinrichtung vom Gehäuse entfernen. Dies begünstigt den Austausch. Auch ist es denkbar, dass sich die Heizeinrichtung bei dieser Befestigungsart zumindest teilweise in das Gehäuse der Brühgruppe hinein erstreckt, wodurch sich der Bauraum insgesamt reduzieren lässt.

Alternativ kann die Heizeinrichtung vorzugsweise schweißtechnisch oder aber auch klebetechnisch fest mit dem Gehäuse verbunden sein, wodurch besondere Dichtungen zwischen dem Gehäuse der Brühgruppe und der Heizeinrichtung entbehrlich sind. Eine Art monolithische Bauweise ist dabei realisiert.

Der Wasserzulauf zur Heizeinrichtung und/oder von der Heizeinrichtung in die Brühgruppe hinein, d.h. die geförderte Wassermenge pro Zeiteinheit, kann manuell regulierbar sein. Im Rahmen eines automatischen Betriebs ist es von Vorteil, wenn der Wasserzulauf - alternativ oder zusätzlich - automatisch, vorzugsweise gemäß einem abgespeicherten Wert, regulierbar ist. In ganz besonders vorteilhafter Weise ist der Wasserzulauf automatisch gemäß einem vorzugsweise während des Betriebs abgespeicherten Wert regulierbar, nämlich aufgrund eines abgespeicherten "Erfahrungswerts".

In besonders vorteilhafter Weise lässt sich der automatische Betrieb nach Auswahl eines von mehreren abgespeicherten Werten durchführen, nämlich eine Regulierung anhand auswählbarer Daten.

Die Regulierung des Wasserzulaufs erfolgt über eine Pumpe, insbesondere über die Ansteuerung einer Pumpe. Auch ist es denkbar, dass der Wasserzulauf über ein der Pumpe nachgeschaltetes Nadelventil gesteuert wird. Dies gilt sowohl in Bezug auf den manuellen Betrieb als auch in Bezug auf den automatischen Betrieb. Somit ist eine Brühgruppe geschaffen, die sich sowohl automatisch als auch manuell betreiben lässt, wobei die Heizeinrichtung unmittelbar dem Gehäuse der Brühgruppe zugeordnet ist.

Die erfindungsgemäße Espressomaschine umfasst eine Brühgruppe der zuvor erörterten Art.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel einer erfindungsgemäßen Brühgruppe mit angeflanschter Heizeinrichtung,
- Fig. 2: in einer schematischen Seitenansicht den Gegenstand aus Figur 1 um 180° gedreht,
- Fig. 3: in einer schematischen Schnittdarstellung die Brühgruppe aus den Figuren 1 und 2.

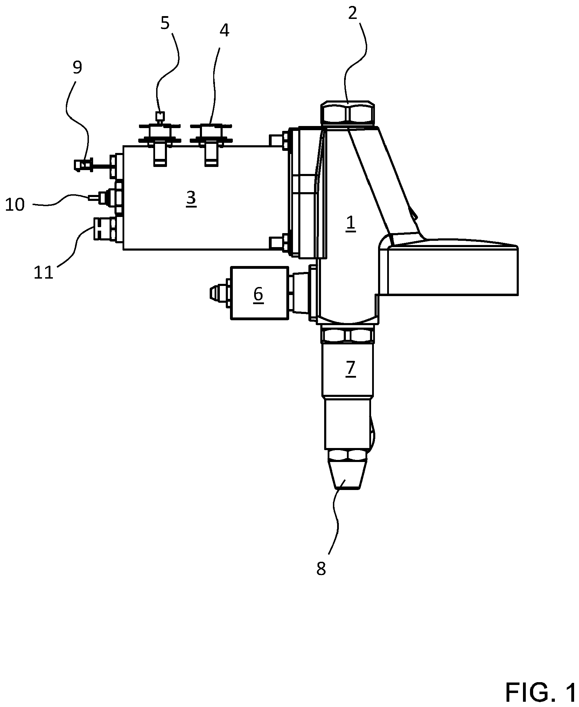

Figur 1 zeigt ein Ausführungsbeispiel einer erfindungsgemäßen Brühgruppe in einer schematischen Seitenansicht. Die Brühgruppe umfasst als Hauptkörper ein Gehäuse 1, welches nach oben durch eine öffenbare Kappe 2 im Sinne eines Endstücks verschlossen ist.

An das Gehäuse 1 ist eine Heizeinrichtung 3 in Form eines Boilers angeflanscht. Die Heizeinrichtung ist mit einem automatischen Thermostat 4 und einem manuellen Thermostat 5 ausgestattet.

Figur 1 lässt des Weiteren ein Magnetventil 6 erkennen, welches den Durchlauf des heißen Wassers von der Heizeinrichtung 3 in den eigentlichen Brühkopf freigibt.

Des Weiteren ist ein Anschlussstück 7 mit einem als Abdeckung dienenden Endstück 8 vorgesehen.

Endseitig am Gehäuse der Heizeinrichtung 3 befindet sich ein Temperatursensor 9 und erstreckt sich von dort aus ein Heizelement 10 in das Innere der Heizeinrichtung. Des Weiteren ist ein Wasseranschluss 11 im Sinne eines Einlasses vorgesehen, wobei das Wasser über eine in der Figur nicht gezeigte Pumpe gefördert wird.

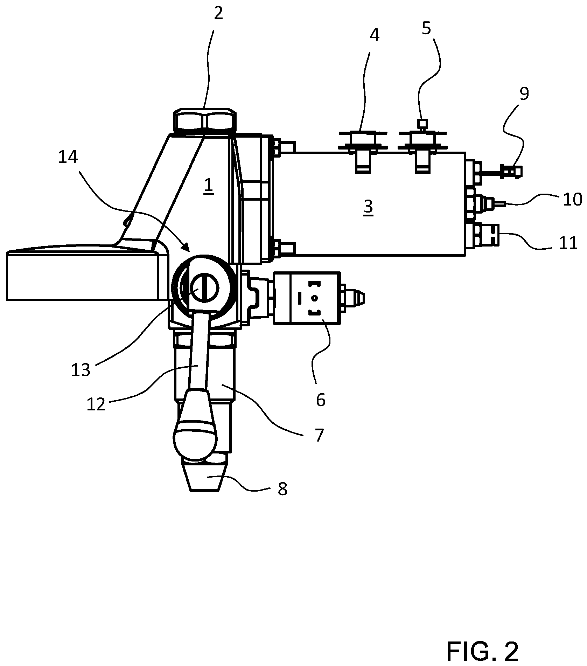

Figur 2 zeigt die Brüheinrichtung aus Figur 1 von der anderen Seite, d.h. um 180° gedreht.

Gegenüber Figur 1 ist des Weiteren ein Betätigungshebel 12 erkennbar, der über eine Befestigungsschraube 13 mit einem Ventil 14 wirkverbunden ist. Der Betätigungshebel 12 dient zur Aktivierung der Pumpe und gegebenenfalls zur Betätigung eines Nadelventils, nämlich in beiden Fällen zur Regulierung des Wasserzulaufs.

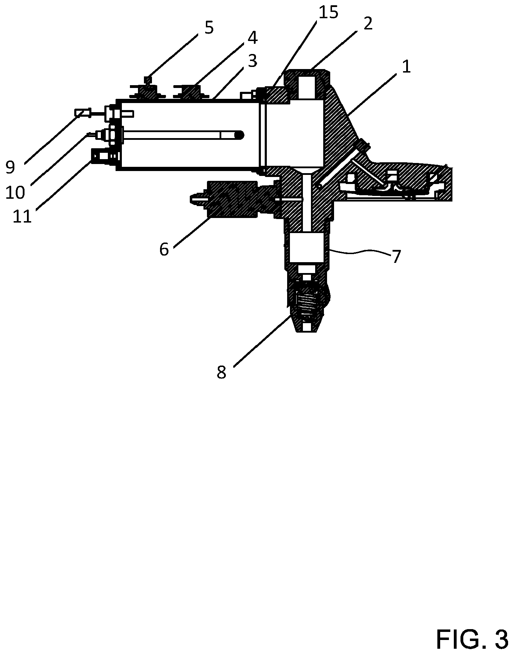

Figur 3 zeigt den Gegenstand aus Figur 1 in einer Schnittdarstellung, nämlich mit den zuvor erörterten Bestandteilen. Gegenüber den Figuren 1 und 2 ist zusätzlich eine Dichtung 15 erkennbar, die das angeflanschte Gehäuse der Heizeinrichtung 3 gegenüber dem Gehäuse 1 der Brühgruppe abdichtet.

Für die erfindungsgemäße Brühgruppe ist wesentlich, dass die Heizeinrichtung unmittelbar am Gehäuse 1 angeordnet ist und dass mit dieser Brühgruppe sowohl ein manueller als auch ein automatischer Betrieb möglich ist.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Lehre lediglich zur Erörterung der beanspruchten Lehre dient, diese jedoch nicht auf das Ausführungsbeispiel einschränkt.

### Bezugszeichenliste

- 1: Hauptkörper, Gehäuse
- 2: Endstück, Verschluss, Kappe
- 3: Heizeinrichtung, Boiler
- 4: Thermostat, automatisch
- 5: Thermostat, manuell
- 6: Magnetventil
- 7: Anschlussstück
- 8: Anschlussabdeckung/Endstück
- 9: Temperatursensor
- 10: Heizelement
- 11: Wasseranschluss/Einlass
- 12: Betätigungshebel
- 13: Befestigungsschraube für den Betätigungshebel
- 14: Ventil
- 15: Dichtung

## Patentansprüche

1. Brühgruppe für eine Espressomaschine, mit einem Gehäuse und einer unmittelbar mit dem Gehäuse verbundenen und/oder zumindest teilweise in das Gehäuse integrierten Heizeinrichtung.

2. Brühgruppe nach Anspruch 1, **dadurch gekennzeichnet, dass** im Betrieb der Wasserzulauf von der Heizeinrichtung in die Brühgruppe regulierbar ist.

3. Brühgruppe nach Anspruch 1 oder 2, **dadurch gekennzeichnet, dass** die Heizeinrichtung als elektrischer Boiler ausgeführt ist.

4. Brühgruppe nach einem der Ansprüche 1 bis 3, **dadurch gekennzeichnet, dass** die Heizeinrichtung, insbesondere der Boiler, an das Gehäuse angeflanscht ist.

5. Brühgruppe nach einem der Ansprüche 1 bis 4, **dadurch gekennzeichnet, dass** die Heizeinrichtung, insbesondere der Boiler, vorzugsweise schweißtechnisch fest mit dem Gehäuse verbunden ist.

6. Brühgruppe nach einem der Ansprüche 1 bis 5, **dadurch gekennzeichnet, dass** der Wasserzulauf manuell regulierbar ist.

7. Brühgruppe nach einem der Ansprüche 1 bis 6, **dadurch gekennzeichnet, dass** der Wasserzulauf automatisch, vorzugsweise gemäß einem abgespeicherten Wert, regulierbar ist.

8. Brühgruppe nach einem der Ansprüche 1 bis 7, **dadurch gekennzeichnet, dass** der Wasserzulauf automatisch gemäß einem vorzugsweise während des Betriebs abspeicherbaren Wert regulierbar ist.

9. Brühgruppe nach einem der Ansprüche 1 bis 8, **dadurch gekennzeichnet, dass** der Wasserzulauf automatisch, nach Auswahl eines von mehreren abgespeicherten Werten, regulierbar ist.

10. Brühgruppe nach einem der Ansprüche 1 bis 9, **dadurch gekennzeichnet, dass** der Wasserzulauf über eine Pumpe, insbesondere über die Ansteuerung einer Pumpe, regulierbar ist.

11. Espressomaschine mit einer Brühgruppe nach einem der Ansprüche 1 bis 10.
